(19) Europäisches Patentamt
European Patent Office
Office européen des brevets

(11) **EP 4 692 922 A1**

(12) **EUROPEAN PATENT APPLICATION**
published in accordance with Art. 153(4) EPC

(43) Date of publication:
**11.02.2026 Bulletin 2026/07**

(21) Application number: **24777634.7**

(22) Date of filing: **04.03.2024**

(51) International Patent Classification (IPC):
**G02F 1/365** (2006.01)

(52) Cooperative Patent Classification (CPC):
**G02F 1/365; H04Q 11/00**

(86) International application number:
**PCT/CN2024/079898**

(87) International publication number:
**WO 2024/198844 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2023 CN 202310349077**

(71) Applicants:
• **Peng Cheng Laboratory
Shenzhen, Guangdong 518055 (CN)**
• **HUAWEI TECHNOLOGIES CO., LTD.
Shenzhen, Guangdong 518129 (CN)**

(72) Inventors:
• **WU, Yuping
Shenzhen, Guangdong 518129 (CN)**
• **CHEN, Jianfeng
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **WAVELENGTH CONVERSION SYSTEM AND WAVELENGTH CONVERSION METHOD**

(57) Embodiments of this application provide a wavelength conversion system and a wavelength conversion method. Specifically, the wavelength conversion system includes a first wavelength conversion module, a second wavelength conversion module, and a third wavelength conversion module. The first wavelength conversion module and the third wavelength conversion module are configured to perform cross-band wavelength conversion on input optical signals, and the second wavelength conversion module is configured to perform intra-band wavelength conversion on an input optical signal. In different scenarios, at least one wavelength conversion module may be selected from the foregoing three wavelength conversion modules according to actual requirements, to perform wavelength conversion, so that both intra-band conversion of any wavelength and cross-band conversion of any wavelength can be implemented. Therefore, the wavelength conversion system provided in this application can implement conversion of any wavelength in a wide spectrum range, to meet a requirement of a future wide-spectrum communication system.

FIG. 3

EP 4 692 922 A1

**Description**

This application claims priority to Chinese Patent Application No. 202310349077.9, filed with the China National Intellectual Property Administration on March 27, 2023 and entitled "WAVELENGTH CONVERSION SYSTEM AND WAVELENGTH CONVERSION METHOD", which is incorporated herein by reference in its entirety.

TECHNICAL FIELD

This application relates to the field of optical networks, and in particular, to a wavelength conversion system and a wavelength conversion method.

BACKGROUND

With development of optical networks, wavelength conflicts gradually limit utilization of the networks due to continuous spectrum expansion and introduction of optical cross-connect (optical cross-connect, OXC). Particularly, with an increase in a single-wavelength rate, a quantity of available wavelengths in the optical network gradually decreases, the wavelength conflict becomes more evident, and impact of the wavelength conflict also becomes more significant.

To resolve this problem, a currently used mainstream solution is optical-to-electrical conversion (Optical-Electrical-Optical conversion, OEO). To be specific, data is first converted from light with a wavelength of $\lambda_{in}$ into an electrical signal through an optical-to-electrical conversion process, and after decoding and error correction, the data is re-modulated onto light with a wavelength of $\lambda_{out}$ for transmission. However, the OEO solution is limited by a tunable wavelength range of a light source, and cannot implement conversion of any wavelength in a wide spectrum range. Consequently, it is difficult to meet a requirement of a future wide-spectrum communication system.

**SUMMARY**

Embodiments of this application provide a wavelength conversion system and a wavelength conversion method, to implement conversion of any wavelength in a wide spectrum range, so as to meet a requirement of a future wide-spectrum communication system.

According to a first aspect, an embodiment of this application provides a wavelength conversion system. The wavelength conversion system includes: a first optical switch, a second optical switch, a first wavelength conversion module, a second wavelength conversion module, and a third wavelength conversion module. The first optical switch includes a first input port, a second input port, a first output port, and a second output port. The second optical switch includes a third input port, a fourth input port, a third output port, and a fourth output port. An original optical signal is input to the first input port, and the second input port is connected to the fourth output port. The first output port is connected to an input end of the first wavelength conversion module, and the second output port is connected to an input end of the second wavelength conversion module. The third input port is connected to an output end of the first wavelength conversion module, and the fourth input port is connected to an output end of the second wavelength conversion module. The third output port is connected to an input end of the third wavelength conversion module, and a target optical signal is output from an output end of the third wavelength conversion module. The first optical switch is configured to control a connection between the input port and the output port of the first optical switch. The second optical switch is configured to control a connection between the input port and the output port of the second optical switch. The first wavelength conversion module is configured to perform cross-band wavelength conversion on an optical signal from the first optical switch. The second wavelength conversion module is configured to perform intra-band wavelength conversion on the optical signal from the first optical switch. The third wavelength conversion module is configured to perform cross-band wavelength conversion on an optical signal from the second optical switch.

In this implementation, the wavelength conversion system includes the first wavelength conversion module, the second wavelength conversion module, and the third wavelength conversion module. The first wavelength conversion module and the third wavelength conversion module are configured to perform cross-band wavelength conversion on input optical signals, and the second wavelength conversion module is configured to perform intra-band wavelength conversion on an input optical signal. In different scenarios, at least one wavelength conversion module may be selected from the foregoing three wavelength conversion modules according to actual requirements, to perform wavelength conversion, so that both intra-band conversion of any wavelength and cross-band conversion of any wavelength can be implemented. Therefore, the wavelength conversion system provided in this application can implement conversion of any wavelength in a wide spectrum range, to meet a requirement of a future wide-spectrum communication system.

In some possible implementations, the second wavelength conversion module is specifically configured to perform, based on first pump light and second pump light, intra-band wavelength conversion on the optical signal from the first optical switch. A frequency of the first pump light is at a central position between a first band and a second band, and a wavelength of the second pump light and a wavelength of the optical signal from the first optical switch are in the first band or the second band. The first wavelength conversion module is specifically configured to perform, based on third pump light, cross-band wavelength conversion on the optical signal from the first optical switch. A wavelength of the first pump light is twice a wavelength of the third pump light, a first frequency difference exists between a frequency of an optical signal on which wavelength conversion is not performed by the first wavelength conversion module and the frequency of the first pump light, and a second frequency difference exists between a frequency of an optical signal obtained through wavelength conversion performed by the first wavelength conversion module and the frequency of the first pump light, and an absolute value of the first frequency difference is equal to an absolute value of the second frequency difference. The third wavelength conversion module is specifically configured to perform, based on the third pump light, cross-band wavelength conversion on the optical signal from the second optical switch. A third frequency difference exists between a frequency of an optical signal on which wavelength conversion is not performed by the third wavelength conversion module and the wavelength of the first pump light, a fourth frequency difference exists between a frequency of an optical signal obtained through wavelength conversion performed by the third wavelength conversion module and the frequency of the first pump light, and an absolute value of the third frequency difference is equal to an absolute value of the fourth frequency difference.

In this implementation, the second wavelength conversion module specifically uses wavelength conversion that is based on a third-order nonlinearity effect, and the first wavelength conversion module and the third wavelength conversion module specifically use wavelength conversion that is based on a second-order nonlinearity effect, to enhance implementability of this solution.

In some possible implementations, the wavelength conversion system further includes a first pump light source, a second pump light source, and a frequency multiplication module. The first pump light source is configured to separately output the first pump light to the frequency multiplication module and the second wavelength conversion module. The second pump light source is configured to output the second pump light to the second wavelength conversion module. The frequency multiplication module is configured to: perform frequency multiplication on the first pump light to obtain the third pump light, and separately output the third pump light to the first wavelength conversion module and the third wavelength conversion module.

In this implementation, the first wavelength conversion module, the second wavelength conversion module, and the third wavelength conversion module may reuse the first pump light source. This implementation is simpler, saves pump light resources, and helps reduce costs, a volume, and power consumption.

In some possible implementations, the frequency $\omega_{p1}$ of the first pump light, the frequency $\omega_{p2}$ of the second pump light, a frequency $\omega_{in}$ of an optical signal input into the second wavelength conversion module, and a frequency $\omega_{out}$ of an optical signal output by the second wavelength conversion module satisfy one of the following conditions: a condition 1: $\omega_{out} = \omega_{p1} + \omega_{p2} - \omega_{in}$; a condition 2: $\omega_{out} = \omega_{p1} + \omega_{in} - \omega_{p2}$; or a condition 3: $\omega_{out} = \omega_{p2} + \omega_{in} - \omega_{p1}$. In this implementation, because the wavelength of the first pump light is fixed at the central position between the first band and the second band, the wavelength of the second pump light may be flexibly adjusted based on a wavelength of an optical signal actually input into the second wavelength conversion module and a wavelength of an optical signal that actually needs to be output by the second wavelength conversion module, to improve flexibility of this solution.

In some possible implementations, a wavelength of the original optical signal is in the first band, the first input port is connected to the second output port, and the fourth input port is connected to the third output port. The second wavelength conversion module is specifically configured to perform, in the first band, wavelength conversion on the original optical signal to obtain the target optical signal. The third wavelength conversion module is specifically configured to: perform wavelength conversion on the target optical signal to obtain an optical signal in the second band, and filter out the optical signal in the second band to output the target optical signal.

In some possible implementations, a wavelength of the original optical signal is in the second band, the first input port is connected to the first output port, the second input port is connected to the second output port, the third input port is connected to the fourth output port, and the fourth input port is connected to the third output port. The first wavelength conversion module is specifically configured to perform wavelength conversion on the original optical signal to obtain an optical signal in the first band. The second wavelength conversion module is specifically configured to perform, in the first band, wavelength conversion on the optical signal from the first wavelength conversion module. The third wavelength conversion module is specifically configured to perform wavelength conversion on the optical signal from the second wavelength conversion module to obtain a target optical signal whose wavelength is in the second band.

In some possible implementations, a wavelength of the original optical signal is in the first band, the first input port is connected to the second output port, and the fourth input port is connected to the third output port. The second wavelength conversion module is specifically configured to perform, in the first band, wavelength conversion on the original signal. The third wavelength conversion module is specifically configured to convert a wavelength of the optical signal from the second wavelength conversion module to be in the second band to obtain the target optical signal.

In some possible implementations, a wavelength of the original optical signal is in the second band, the first input port is connected to the first output port, the second input port is connected to the second output port, the third input port is connected to the fourth output port, and the fourth input port is connected to the third output port. The first wavelength conversion module is specifically configured to perform wavelength conversion on the original optical signal to obtain an optical signal in the first band. The second wavelength conversion module is specifically configured to perform, in the first band, wavelength conversion on the optical signal from the first wavelength conversion module to obtain the target optical signal. The third wavelength conversion module is specifically configured to: perform wavelength conversion on the target optical signal to obtain an optical signal in the second band, and filter out the optical signal in the second band to output the target optical signal.

In some possible implementations, a dielectric material used by the first wavelength conversion module and the third wavelength conversion module is periodically polarized lithium niobate (periodically poled lithium niobate, PPLN), and a dielectric material used by the second wavelength conversion module is a highly nonlinear fiber (Highly nonlinear fiber, HNLF) or a silicon nitride (SiN) waveguide.

In some possible implementations, the first wavelength conversion module uses a loop polarization diversity structure or a parallel polarization diversity structure, the second wavelength conversion module uses a loop polarization diversity structure or a parallel polarization diversity structure, the third wavelength conversion module uses a loop polarization diversity structure or a parallel polarization diversity structure, and transmission delays of two polarized optical signals are the same in the loop polarization diversity structure or the parallel polarization diversity structure.

According to a second aspect, this application provides a wavelength conversion method. The method is applied to a wavelength conversion system, and the wavelength conversion system includes: a first optical switch, a second optical switch, a first wavelength conversion module, a second wavelength conversion module, and a third wavelength conversion module. The first optical switch includes a first input port, a second input port, a first output port, and a second output port. The second optical switch includes a third input port, a fourth input port, a third output port, and a fourth output port. An original optical signal is input to the first input port, the second input port is connected to the fourth output port, the first output port is connected to an input end of the first wavelength conversion module, the second output port is connected to an input end of the second wavelength conversion module, the third input port is connected to an output end of the first wavelength conversion module, the fourth input port is connected to an output end of the second wavelength conversion module, the third output port is connected to an input end of the third wavelength conversion module, and a target optical signal is output from the output end of the third wavelength conversion module. The wavelength conversion method includes the following steps: controlling a connection between the input port and the output port of the first optical switch by using the first optical switch; controlling a connection between the input port and the output port of the second optical switch by using the second optical switch; performing, by using the first wavelength conversion module, cross-band wavelength conversion on an optical signal from the first optical switch; performing, by using the second wavelength conversion module, intra-band wavelength conversion on the optical signal from the first optical switch; and performing, by using the third wavelength conversion module, cross-band wavelength conversion on an optical signal from the second optical switch.

In some possible implementations, performing, by using the second wavelength conversion module, intra-band wavelength conversion on the optical signal from the first optical switch includes: performing, by using the second wavelength conversion module and based on first pump light and second pump light, intra-band wavelength conversion on the optical signal from the first optical switch. A frequency of the first pump light is at a central position between a first band and a second band, and a wavelength of the second pump light and a wavelength of the optical signal from the first optical switch are in the first band or the second band. Performing, by using the first wavelength conversion module, cross-band wavelength conversion on the optical signal from the first optical switch includes: performing, by using the first wavelength conversion module and based on third pump light, cross-band wavelength conversion on the optical signal from the first optical switch. A wavelength of the first pump light is twice a wavelength of the third pump light, a first frequency difference exists between a frequency of an optical signal on which wavelength conversion is not performed by the first wavelength conversion module and the frequency of the first pump light, and a second frequency difference exists between a frequency of an optical signal obtained through wavelength conversion performed by the first wavelength conversion module and the frequency of the first pump light, and an absolute value of the first frequency difference is equal to an absolute value of the second frequency difference. Performing, by using the third wavelength conversion module, cross-band wavelength conversion on the optical signal from the second optical switch includes: performing, by using the third wavelength conversion module and based on the third pump light, cross-band wavelength conversion on the optical signal from the second optical switch. A third frequency difference exists between a frequency of an optical signal on which wavelength conversion is not performed by the third wavelength conversion module and the wavelength of the first pump light, a fourth frequency difference exists between a frequency of an optical signal obtained through wavelength conversion performed by the third wavelength conversion module and the frequency of the first pump light, and an absolute value of the third frequency difference is equal to an absolute value of the fourth frequency difference.

In some possible implementations, the wavelength conversion system further includes a first pump light source, a second pump light source, and a frequency multiplication module. The method further includes: separately outputting the first pump light to the frequency multiplication module and the second wavelength conversion module by using the first pump light source; outputting the second pump light to the second wavelength conversion module by using the second pump light source; and performing, by using the frequency multiplication module, frequency multiplication on the first pump light to obtain the third pump light, and separately outputting the third pump light to the first wavelength conversion module and the third wavelength conversion module.

In some possible implementations, the frequency $\omega_{p1}$ of the first pump light, the frequency $\omega_{p2}$ of the second pump light, a frequency $\omega_{in}$ of an optical signal input into the second wavelength conversion module, and a frequency $\omega_{out}$ of an optical signal output by the second wavelength conversion module satisfy one of the following conditions: a condition 1:

$\omega_{ou}t = \omega_{p1} + \omega_{p2} - \omega_{in}$; a condition 2: $\omega_{out} = \omega_{p1} + \omega_{in} - \omega_{p2}$; or a condition 3: $\omega_{out} = \omega_{p2} + \omega_{in} - \omega_{p1}$.

In some possible implementations, a wavelength of the original optical signal is in the first band, the first input port is connected to the second output port, and the fourth input port is connected to the third output port. Performing, by using the second wavelength conversion module, intra-band wavelength conversion on the optical signal from the first optical switch includes: performing, in the first band by using the second wavelength conversion module, wavelength conversion on the original optical signal to obtain the target optical signal. Performing, by using the third wavelength conversion module, cross-band wavelength conversion on the optical signal from the second optical switch includes: performing, by using the third wavelength conversion module, wavelength conversion on the target optical signal to obtain an optical signal in the second band, and filtering out the optical signal in the second band to output the target optical signal.

In some possible implementations, a wavelength of the original optical signal is in the second band, the first input port is connected to the first output port, the second input port is connected to the second output port, the third input port is connected to the fourth output port, and the fourth input port is connected to the third output port. Performing, by using the first wavelength conversion module, cross-band wavelength conversion on the optical signal from the first optical switch includes: performing, by using the first wavelength conversion module, wavelength conversion on the original optical signal to obtain an optical signal in the first band. Performing, by using the second wavelength conversion module, intra-band wavelength conversion on the optical signal from the first optical switch includes: performing, in the first band by using the second wavelength conversion module, wavelength conversion on the optical signal from the first wavelength conversion module. Performing, by using the third wavelength conversion module, cross-band wavelength conversion on the optical signal from the second optical switch includes: performing, by using the third wavelength conversion module, wavelength conversion on the optical signal from the second wavelength conversion module to obtain a target optical signal whose wavelength is in the second band.

In some possible implementations, a wavelength of the original optical signal is in the first band, the first input port is connected to the second output port, and the fourth input port is connected to the third output port. Performing, by using the second wavelength conversion module, intra-band wavelength conversion on the optical signal from the first optical switch includes: performing, in the first band by using the second wavelength conversion module, wavelength conversion on the original signal. Performing, by using the third wavelength conversion module, cross-band wavelength conversion on the optical signal from the second optical switch includes: converting, by using the third wavelength conversion module, a wavelength of the optical signal from the second wavelength conversion module to be in the second band to obtain the target optical signal.

In some possible implementations, a wavelength of the original optical signal is in the second band, the first input port is connected to the first output port, the second input port is connected to the second output port, the third input port is connected to the fourth output port, and the fourth input port is connected to the third output port. Performing, by using the first wavelength conversion module, cross-band wavelength conversion on the optical signal from the first optical switch includes: performing, by using the first wavelength conversion module, wavelength conversion on the original optical signal to obtain an optical signal in the first band. Performing, by using the second wavelength conversion module, intra-band wavelength conversion on the optical signal from the first optical switch includes: performing, in the first band by using the second wavelength conversion module, wavelength conversion on the optical signal from the first wavelength conversion module to obtain the target optical signal. Performing, by using the third wavelength conversion module, cross-band wavelength conversion on the optical signal from the second optical switch includes: performing, by using the third wavelength conversion module, wavelength conversion on the target optical signal to obtain an optical signal in the second band, and filtering out the optical signal in the second band to output the target optical signal.

In some possible implementations, a dielectric material used by the first wavelength conversion module and the third wavelength conversion module is periodically polarized lithium niobate PPLN, and a dielectric material used by the second wavelength conversion module is a highly nonlinear fiber or a SiN waveguide.

In some possible implementations, the first wavelength conversion module uses a loop polarization diversity structure or a parallel polarization diversity structure, the second wavelength conversion module uses a loop polarization diversity structure or a parallel polarization diversity structure, the third wavelength conversion module uses a loop polarization diversity structure or a parallel polarization diversity structure, and transmission delays of two polarized optical signals are the same in the loop polarization diversity structure or the parallel polarization diversity structure.

In this embodiment of this application, the wavelength conversion system includes the first wavelength conversion module, the second wavelength conversion module, and the third wavelength conversion module. The first wavelength conversion module and the third wavelength conversion module are configured to perform cross-band wavelength conversion on input optical signals, and the second wavelength conversion module is configured to perform intra-band wavelength conversion on an input optical signal. In different scenarios, at least one wavelength conversion module may be selected from the foregoing three wavelength conversion modules according to actual requirements, to perform wavelength conversion, so that both intra-band conversion of any wavelength and cross-band conversion of any wavelength can be implemented. Therefore, the wavelength conversion system provided in this application can implement conversion of any wavelength in a wide spectrum range, to meet a requirement of a future wide-spectrum communication system.

BRIEF DESCRIPTION OF DRAWINGS

FIG. 1 is a diagram of wavelength conversion that is based on a third-order nonlinearity effect;

FIG. 2 is a diagram of wavelength conversion that is based on a second-order nonlinearity effect;

FIG. 3 is a first diagram of a structure of a wavelength conversion system according to an embodiment of this application;

FIG. 4 is a second diagram of a structure of a wavelength conversion system according to an embodiment of this application;

FIG. 5 is a diagram of wavelength conversion performed by a second wavelength conversion module according to an embodiment of this application;

FIG. 6 is a diagram of wavelength conversion performed by a second wavelength conversion module in a plurality of scenarios according to an embodiment of this application;

FIG. 7 is a third diagram of a structure of a wavelength conversion system according to an embodiment of this application;

FIG. 8 is a fourth diagram of a structure of a wavelength conversion system according to an embodiment of this application;

FIG. 9 is a diagram of a structure of a first wavelength conversion module according to an embodiment of this application;

FIG. 10 is a diagram of a structure of a second wavelength conversion module according to an embodiment of this application;

FIG. 11 is another diagram of a structure of a second wavelength conversion module according to an embodiment of this application; and

FIG. 12 is a diagram of an embodiment of a wavelength conversion method according to this application.

**DESCRIPTION OF EMBODIMENTS**

Embodiments of this application provide a wavelength conversion system and a wavelength conversion method, to implement conversion of any wavelength in a wide spectrum range, so as to meet a requirement of a future wide-spectrum communication system.

It should be noted that, the terms "first", "second", and the like in the specification, the claims, and the accompanying drawings of this application are intended to distinguish between similar objects, but do not limit a specific order or sequence. It should be understood that the foregoing terms may be interchanged in appropriate cases, so that embodiments described in this application can be implemented in an order other than that in the content described in this application. Further, the term "include" and any variations thereof are intended to cover nonexclusive inclusions. For example, a process, a method, a system, a product, or a device that includes a list of steps or units is not necessarily limited to those expressly enumerated steps or units, but may include other steps or units not expressly enumerated or inherent to such a process, method, product, or device.

First, some terms that appear in this application are explained.

(1) Wavelength conversion that is based on a third-order nonlinearity effect

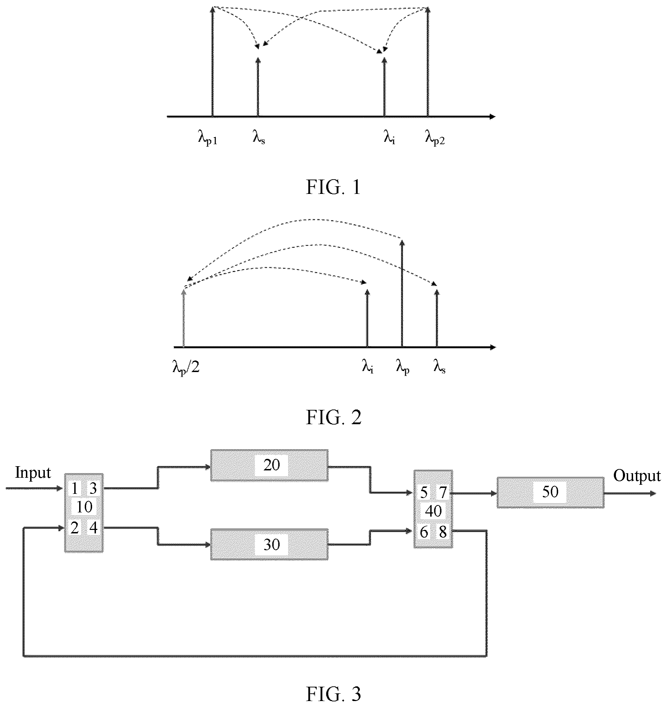

FIG. 1 is a diagram of wavelength conversion that is based on a third-order nonlinearity effect. As shown in FIG. 1, data is carried on an optical signal with a wavelength of $\lambda_s$, and then under the action of pump light with a wavelength of $\lambda_{p1}$

and pump light with a wavelength of $\lambda_{p2}$, energy is transferred from two beams of pump light to an optical signal with a wavelength of $\lambda_s$, and an optical signal with a wavelength of $\lambda_i$ is further generated. The data carried on the optical signal with the wavelength of $\lambda_s$ is also replicated to the optical signal with the wavelength of $\lambda_i$. It should be understood that the wavelength conversion that is based on the third-order nonlinearity effect mainly uses a four-wave mixing effect, and a used nonlinear dielectric may be a highly nonlinear fiber (Highly Nonlinear Fiber, HNLF), a silicon nitride (SiN) waveguide, or the like.

(2) Wavelength conversion that is based on a second-order nonlinearity effect

FIG. 2 is a diagram of wavelength conversion that is based on a second-order nonlinearity effect. As shown in FIG. 2, a frequency multiplication feature of a second-order nonlinear crystal may be first used to perform frequency multiplication on pump light, that is, perform frequency multiplication on pump light with a wavelength of $\lambda_p$ (with a frequency of $\omega_p$) to obtain pump light with a wavelength of $\lambda_p/2$ (with a frequency of $2\omega_p$). Then, an optical signal of a new wavelength is generated by using a difference frequency effect in the second-order nonlinear crystal. For example, an optical signal with a wavelength of $\lambda_i$ is generated based on an optical signal with a wavelength of $\lambda_s$, to implement wavelength conversion. It should be understood that, $\omega_i = 2\omega_p - \omega_s$, where $\omega_i$ represents a frequency of the optical signal with the wavelength of $\lambda_i$, $\omega_s$ represents a frequency of the optical signal with the wavelength of $\lambda_s$, and $\omega_p$ represents a frequency of pump light with a wavelength of $\lambda_p$.

The following describes in detail a wavelength conversion system provided in this application.

FIG. 3 is a first diagram of a structure of a wavelength conversion system according to an embodiment of this application. As shown in FIG. 3, the wavelength conversion system includes a first optical switch 10, a first wavelength conversion module 20, a second wavelength conversion module 30, a second optical switch 40, and a third wavelength conversion module 50. The first optical switch 10 includes a port 1, a port 2, a port 3, and a port 4. The port 1 and the port 2 are input ports, and the port 3 and the port 4 are output ports. The second optical switch 40 includes a port 5, a port 6, a port 7, and a port 8. The port 5 and the port 6 are input ports, and the port 7 and the port 8 are output ports.

Specifically, an original optical signal is input into the first optical switch 10 from the port 1. The port 2 is connected to the port 8, the port 3 is connected to an input end of the first wavelength conversion module 20, and the port 4 is connected to an input end of the second wavelength conversion module 30. The port 5 is connected to an output end of the first wavelength conversion module 20, and the port 6 is connected to an output end of the second wavelength conversion module 30. The port 7 is connected to an input end of the third wavelength conversion module 50. A target optical signal is output from an output end of the third wavelength conversion module 50. A wavelength of the target optical signal is different from a wavelength of the original optical signal.

It should be noted that the first optical switch 10 and the second optical switch 40 may respectively control a connection between the input port and the output port of the first optical switch 10 and a connection between the input port and the output port of the second optical switch 40. The first optical switch 10 is used as an example. There are the following two connection manners between the input ports and the output ports. Connection manner 1: The port 1 is connected to the port 3, and the port 2 is connected to the port 4. Connection manner 2: The port 1 is connected to the port 4, and the port 2 is connected to the port 3. The second optical switch 40 is used as an example. There are the following two connection manners between the input ports and the output ports. Connection manner 3: The port 5 is connected to the port 7, and the port 6 is connected to the port 8. Connection manner 4: The port 5 is connected to the port 8, and the port 6 is connected to the port 7.

The first wavelength conversion module 20 and the third wavelength conversion module 50 have similar functions, and are both configured to perform cross-band wavelength conversion on input optical signals. A band may also be referred to as a wave band, and one band or wave band includes a plurality of wavelengths. It should be understood that the first wavelength conversion module 20 and the third wavelength conversion module 50 may specifically implement wavelength conversion by using a second-order nonlinearity effect. In an example, a wavelength of the optical signal input into the first wavelength conversion module 20 is $\lambda_s$, and $\lambda_s$ is in a first band. After being processed by the first wavelength conversion module 20, an optical signal with a wavelength of $\lambda_i$ is generated, and $\lambda_i$ is in a second band. In this way, the first wavelength conversion module 20 may filter out the optical signal with the wavelength of $\lambda_s$, and output the optical signal with the wavelength of $\lambda_i$. Similarly, the foregoing process is also applicable to the third wavelength conversion module 50. To be specific, a band of a newly generated optical signal is changed compared with that of an input optical signal, to implement cross-band wavelength conversion.

The second wavelength conversion module 30 is configured to perform intra-band wavelength conversion on an input optical signal. It should be understood that the second wavelength conversion module 30 may specifically implement wavelength conversion by using a third-order nonlinearity effect. In an example, a wavelength of the optical signal input into the second wavelength conversion module 30 is $\lambda_s$, and $\lambda_s$ is in the first band. After being processed by the second wavelength conversion module 30, an optical signal with a wavelength of $\lambda_i$ is generated, $\lambda_i$ is also in the first band, and $\lambda_i$ is different from $\lambda_s$. In this way, the second wavelength conversion module 30 may filter out the optical signal with the

wavelength of $\lambda_s$, and output the optical signal with the wavelength of $\lambda_i$. To be specific, a wavelength of a newly generated optical signal is changed compared with a wavelength of an input optical signal, but a band remains unchanged, to implement intra-band wavelength conversion.

It should be understood that, for any one of the first wavelength conversion module 20, the second wavelength conversion module 30, and the third wavelength conversion module 50, light transmitted inside the wavelength conversion module includes input pump light, an optical signal, and a newly generated optical signal of another wavelength. Therefore, a tunable filter is disposed at an egress of any wavelength conversion module, and is configured to filter out an unwanted wavelength, to select a wavelength that needs to enter next-level processing.

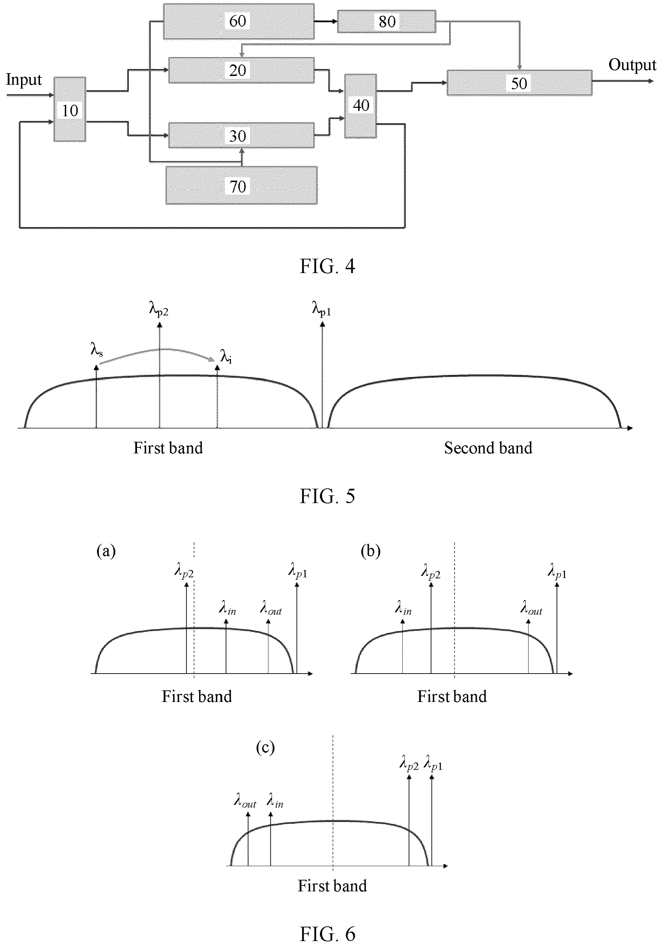

FIG. 4 is a second diagram of a structure of a wavelength conversion system according to an embodiment of this application. As shown in FIG. 4, the wavelength conversion system further includes a first pump light source 60, a second pump light source 70, and a frequency multiplication module 80. Specifically, the first pump light source 60 is configured to separately output first pump light to the second wavelength conversion module 30 and the frequency multiplication module 80. The second pump light source 70 is configured to output second pump light to the second wavelength conversion module 30. The frequency multiplication module 80 is configured to: perform frequency multiplication on the first pump light to obtain third pump light, and separately output the third pump light to the first wavelength conversion module 20 and the third wavelength conversion module 50.

FIG. 5 is a diagram of wavelength conversion performed by a second wavelength conversion module according to an embodiment of this application. As shown in FIG. 5, a wavelength of the first pump light is $\lambda_{p1}$, a wavelength of the second pump light is $\lambda_{p2}$, and the wavelength of the optical signal input into the second wavelength conversion module 30 is $\lambda_s$. The second wavelength conversion module 30 performs, based on the first pump light and the second pump light, intra-band wavelength conversion on the input optical signal to generate an optical signal with a wavelength of $\lambda_i$. FIG. 5 is used as an example. If $\lambda_{p2}$ is in the first band, $\lambda_s$ and $\lambda_i$ are also in the first band, so that wavelength conversion in the first band is implemented. In another example, if $\lambda_{p2}$ is in the second band, $\lambda_s$ and $\lambda_i$ are also in the second band, so that wavelength conversion in the second band is implemented. To be specific, the second wavelength conversion module 30 implements wavelength conversion in a band that the second pump light provided for the second wavelength conversion module 30 is in.

In an example, the first wavelength conversion module 20 and the third wavelength conversion module 50 perform cross-band wavelength conversion between the first band and the second band. To be specific, if a wavelength of an optical signal on which wavelength conversion is not performed is in the first band, a wavelength of an optical signal obtained through wavelength conversion is in the second band; or if a wavelength of an optical signal on which wavelength conversion is not performed is in the second band, a wavelength of an optical signal obtained through wavelength conversion is in the first band. The wavelength of the first pump light is at a central position between the first band and the second band. Both the first wavelength conversion module 20 and the third wavelength conversion module 50 perform, based on the third pump light, cross-band wavelength conversion on the input optical signals. FIG. 2 is used as an example. The wavelength of the first pump light is denoted as $\lambda_p$ (where a frequency is denoted as $\omega_p$), a wavelength of the third pump light is denoted as $\lambda_p/2$ (where a frequency is denoted as $2\omega_p$), a wavelength of the optical signal input into the first wavelength conversion module 20 or the third wavelength conversion module 50 is denoted as $\lambda_s$ (where a frequency is denoted as $\omega_s$), and the first wavelength conversion module 20 or the third wavelength conversion module 50 may generate an optical signal with a wavelength of $\lambda_i$ (where a frequency is denoted as $\omega_i$). For example, $\lambda_s$ is in the second band, and $\lambda_i$ is in the first band, so that cross-band wavelength conversion from the second band to the first band is implemented. Specifically, the cross-band wavelength conversion is mirror wavelength conversion performed by using the frequency of the first pump light as a center. FIG. 2 is still used as an example. A frequency difference between the frequency $\omega_p$ and the frequency $\omega_i$ is equal to a frequency difference between the frequency $\omega_p$ and the frequency $\omega_s$, that is, the frequency $\omega_s$ and the frequency $\omega_i$ are at mirror positions of each other relative to the frequency $\omega_p$.

In some possible scenarios, the first band and the second band may be two adjacent bands, as shown in FIG. 5. For example, the first band is a C band, and the second band is an L band. In some other possible scenarios, the first band and the second band may not be adjacent bands or may be wanted bands, but the frequency of the first pump light still needs to be at the central position between the first band and the second band.

It should be understood that, in the implementation provided in FIG. 4, the first wavelength conversion module 20, the second wavelength conversion module 30, and the third wavelength conversion module 50 may reuse the first pump light source 60. This implementation is simpler, saves pump light resources, and helps reduce costs, a volume, and power consumption. In another possible implementation, the pump light source may alternatively be integrated inside the first wavelength conversion module 20, the second wavelength conversion module 30, and the third wavelength conversion module 50. For example, a pump light source integrated inside the first wavelength conversion module 20 and the third wavelength conversion module 50 provides the third pump light for the first wavelength conversion module 20 and the third wavelength conversion module 50. For another example, a pump light source integrated inside the second wavelength conversion module 30 provides the first pump light and the second pump light for the second wavelength conversion module 30.

It should be noted that, for the second wavelength conversion module 30, because the wavelength of the first pump light is fixed at the central position between the first band and the second band, the wavelength of the second pump light may be flexibly adjusted based on a wavelength of an optical signal actually input into the second wavelength conversion module 30 and a wavelength of an optical signal that actually needs to be output by the second wavelength conversion module 30. Several possible implementations are provided below.

FIG. 6 is a diagram of wavelength conversion performed by a second wavelength conversion module in a plurality of scenarios according to an embodiment of this application. The wavelength of the first pump light is $\lambda_{p1}$, the wavelength of the second pump light is $\lambda_{p2}$, the wavelength of the optical signal input into the second wavelength conversion module 30 is $\lambda_{in}$, and a wavelength of an optical signal output by the second wavelength conversion module 30 is $\lambda_{out}$. For example, $\lambda_i$, and $\lambda_{out}$ are both in the first band. The frequency of the first pump light is denoted as $\omega_{p1}$, a frequency of the second pump light is denoted as $\omega_{p2}$, a frequency of the optical signal input into the second wavelength conversion module 30 is denoted as $\omega_{in}$, and a frequency of an optical signal output by the second wavelength conversion module 30 is denoted as $\omega_{out}$. As shown in (a) of FIG. 6, $\lambda_i$, and $\lambda_{out}$ are between $\lambda_{p1}$ and $\lambda_{p2}$, and $\omega_{out} = \omega_{p1} + \omega_{p2} - \omega_{in}$. As shown in (b) of FIG. 6, $\lambda_{in}$ is the smallest in the four wavelengths, and $\omega_{out} = \omega_{p1} + \omega_{in} - \omega_{p2}$. As shown in (c) of FIG. 6, $\lambda_{out}$ is the smallest in the four wavelengths, and $\omega_{out}t = \omega_{p2} + \omega_{in} - \omega_{p1}$. It should be noted that, when $\lambda_{in}$ and $\lambda_{out}$ are both in the second band, the second wavelength conversion module is configured to perform wavelength conversion in the second band. This is equivalent to describing that the wavelength $\lambda_{p1}$ of the first pump light is on a left side of the second band, and mirror conversion may be performed on a position relationship among corresponding frequencies of $\lambda_{p2}$, $\lambda_{in}$, and $\lambda_{out}$ by using $\lambda_{p1}$ as a center and based on FIG. 6. Corresponding accompanying drawings are not provided herein. In this case, the frequency relationship expressions in the foregoing three examples are still satisfied.

The following uses FIG. 3 as an example to describe in detail several operating modes of the wavelength conversion system.

Operating mode 1: Conversion of any wavelength in the first band

The original optical signal input into the wavelength conversion system is in the first band. The port 1 is connected to the port 4, the port 2 is connected to the port 3, the port 5 is connected to the port 8, and the port 6 is connected to the port 7. The second wavelength conversion module 30 performs, in the first band, wavelength conversion on the original optical signal to obtain the target optical signal, and the second wavelength conversion module 30 filters out the original optical signal to output the target optical signal. The third wavelength conversion module 50 performs wavelength conversion on the target optical signal to obtain an optical signal in the second band. It should be understood that, because the target optical signal finally needs to be output, the third wavelength conversion module 50 filters out the optical signal in the second band to output the target optical signal.

Operating mode 2: Conversion of any wavelength in the second band

The original optical signal input into the wavelength conversion system is in the second band. The port 1 is connected to the port 3, the port 2 is connected to the port 4, the port 5 is connected to the port 8, and the port 6 is connected to the port 7. The first wavelength conversion module 20 performs wavelength conversion on the original optical signal to obtain an optical signal in the first band. The second wavelength conversion module 30 performs, in the first band, wavelength conversion on an optical signal from the first wavelength conversion module 20. The third wavelength conversion module 50 performs wavelength conversion on an optical signal from the second wavelength conversion module 30 to obtain a target optical signal whose wavelength is in the second band.

Operating mode 3: Conversion from any wavelength in the first band into any wavelength in the second band

The original optical signal input into the wavelength conversion system is in the first band. The port 1 is connected to the port 4, the port 2 is connected to the port 3, the port 5 is connected to the port 8, and the port 6 is connected to the port 7. The second wavelength conversion module 30 performs, in the first band, wavelength conversion on the original optical signal. The third wavelength conversion module 50 converts a wavelength of an optical signal from the second wavelength conversion module 30 to be in the second band to obtain the target optical signal.

Operating mode 4: Conversion from any wavelength in the second band into any wavelength in the first band

The original optical signal input into the wavelength conversion system is in the second band. The port 1 is connected to the port 3, the port 2 is connected to the port 4, the port 5 is connected to the port 8, and the port 6 is connected to the port 7. The first wavelength conversion module 20 performs wavelength conversion on the original optical signal to obtain an optical signal in the first band. The second wavelength conversion module 30 performs, in the first band, wavelength conversion on an optical signal from the first wavelength conversion module 20 to obtain the target optical signal. The third wavelength conversion module 50 performs wavelength conversion on an optical signal from the second wavelength conversion module 30 to obtain an optical signal in the second band. It should be understood that, because the target optical signal finally needs to be output, the third wavelength conversion module 50 filters out the optical signal in the second band to output the target optical signal.

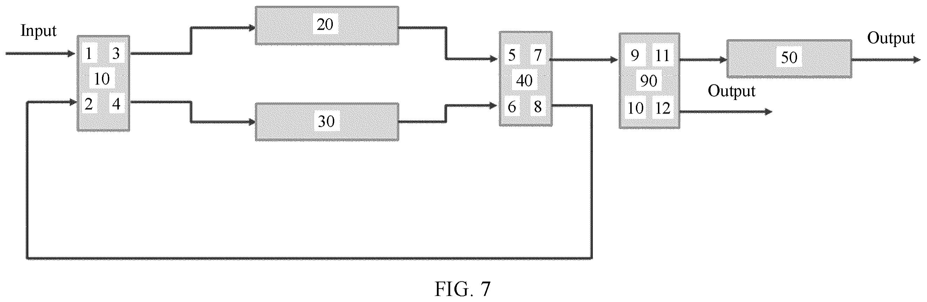

FIG. 7 is a third diagram of a structure of a wavelength conversion system according to an embodiment of this application. As shown in FIG. 7, the wavelength conversion system further includes a third optical switch 90, and the third optical switch 90 includes a port 9, a port 10, a port 11, and a port 12. The port 9 and the port 10 are input ports, and the port 11 and the port 12 are output ports. It should be understood that, in different operating modes of the wavelength conversion system, the third optical switch 90 may adjust a connection relationship between the input port and the output port of the third optical switch 90. For example, in the operating mode 1 and the operating mode 4, the third wavelength conversion module 50 actually does not need to perform wavelength conversion. Therefore, the port 9 may be connected to the port 12, the port 10 may be connected to the port 11, and the target optical signal output by the second wavelength conversion module 30 is finally output from the port 12. For another example, in the operating mode 2 and the operating mode 3, the third wavelength conversion module 50 needs to perform wavelength conversion. Therefore, the port 9 may be connected to the port 11, the port 10 may be connected to the port 12, and the third wavelength conversion module 50 performs wavelength conversion to obtain the target optical signal, and outputs the target optical signal.

The following provides several specific implementations of the first wavelength conversion module 20, the second wavelength conversion module 30, and the third wavelength conversion module 50.

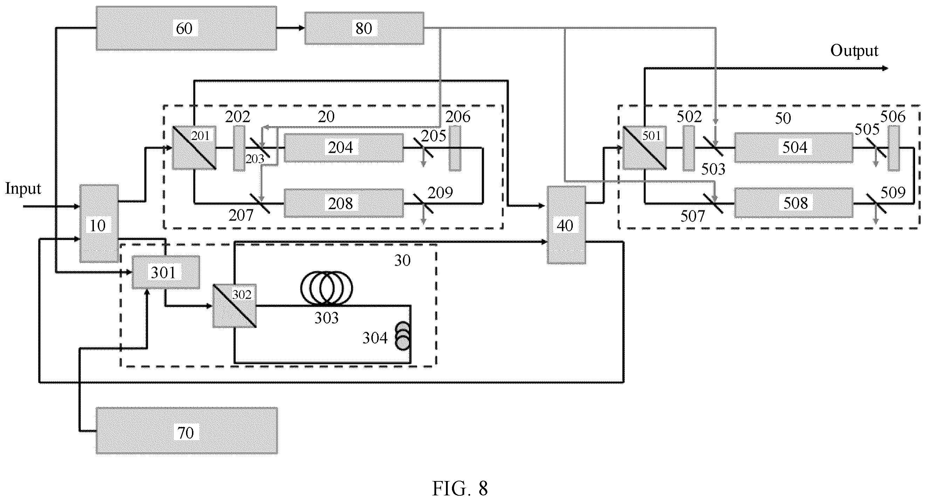

FIG. 8 is a fourth diagram of a structure of a wavelength conversion system according to an embodiment of this application. As shown in FIG. 8, the first wavelength conversion module 20 includes a polarization beam splitter 201, a polarization conversion unit 202, a multiplexing unit 203, a dielectric material 204, a demultiplexing unit 205, a polarization conversion unit 206, a multiplexing unit 207, a dielectric material 208, and a demultiplexing unit 209. The second wavelength conversion module 30 includes a coupler 301, a polarization beam splitter 302, a dielectric material 303, and a polarization controller 304. The third wavelength conversion module 50 includes a polarization beam splitter 501, a polarization conversion unit 502, a multiplexing unit 503, a dielectric material 504, a demultiplexing unit 505, a polarization conversion unit 506, a multiplexing unit 507, a dielectric material 508, and a demultiplexing unit 509.

The first wavelength conversion module 20 is used as an example. The polarization beam splitter 201 is configured to perform polarization beam splitting on input light to obtain two channels of polarized light, where polarization directions of the two channels of polarized light are perpendicular to each other. For ease of description, polarized light in one polarization direction is denoted as polarized light 1, and polarized light in the other polarization direction is denoted as polarized light 2. The dielectric material 204 and the dielectric material 208 are effective for the polarized light 2, but are ineffective for the polarized light 1. Specifically, for one channel of polarized light 1, the polarization conversion unit 202 converts the input the polarized light 1 into the polarized light 2. The multiplexing unit 203 multiplexes the polarized light 2 and the first pump light, and then outputs the multiplexed light to the dielectric material 204. The demultiplexing unit 205 is configured to separate the pump light. The polarization conversion unit 206 converts the polarized light 2 into the polarized light 1, and the polarized light 1 sequentially passes through the demultiplexing unit 209, the dielectric material 208, and the multiplexing unit 207, and then returns to the polarization beam splitter 201. For the other channel of polarized light 2, the multiplexing unit 207 multiplexes the polarized light 2 and the first pump light, and then outputs the multiplexed light to the dielectric material 208. The demultiplexing unit 209 is configured to separate the pump light, and the polarized light 2 output by the demultiplexing unit 205 sequentially passes through the polarization conversion unit 206, the demultiplexing unit 205, the dielectric material 204, the multiplexing unit 203, and the polarization conversion unit 202, and then returns to the polarization beam splitter 201. Then, the polarization beam splitter 201 performs polarization beam combining on the two returned channels of polarized light, and transmits the light obtained through the polarization beam combining to the second optical switch 40. In an example, the dielectric material 204 and the dielectric material 208 may specifically use periodically polarized lithium niobate (periodically poled lithium niobate, PPLN).

The second wavelength conversion module 30 is used as an example. The coupler 301 is configured to couple an optical signal from the first optical switch 10, the first pump light from the first pump light source 60, and the second pump light from the second pump light source 70 to the polarization beam splitter 302. The polarization beam splitter 302 is configured to perform polarization beam splitting on input light to obtain two channels of polarized light, where polarization directions of the two channels of polarized light are perpendicular to each other. For ease of description, polarized light in one polarization direction is denoted as polarized light 1, and polarized light in the other polarization direction is denoted as polarized light 2. The dielectric material 303 is effective for both the polarized light 1 and the polarized light 2. The polarized light 1 sequentially passes through the dielectric material 303 and the polarization controller 304, and then returns to the polarization beam splitter 302. The polarized light 2 sequentially passes through the polarization controller 304 and the dielectric material 303, and then returns to the polarization beam splitter 302. Then, the polarization beam splitter 302 performs polarization beam combining on the two returned channels of polarized light, and transmits the light obtained through the polarization beam combining to the second optical switch 40. In an example, the dielectric material 303 may specifically use a highly nonlinear fiber (Highly nonlinear fiber, HNLF).

The third wavelength conversion module 50 is used as an example. The polarization beam splitter 501 is configured to perform polarization beam splitting on input light to obtain two channels of polarized light, where polarization directions of the two channels of polarized light are perpendicular to each other. For ease of description, polarized light in one polarization direction is denoted as polarized light 1, and polarized light in the other polarization direction is denoted as polarized light 2. The dielectric material 504 and the dielectric material 508 are effective for the polarized light 2, but are ineffective for the polarized light 1. Specifically, for one channel of polarized light 1, the polarization conversion unit 502 converts the input the polarized light 1 into the polarized light 2. The multiplexing unit 503 multiplexes the polarized light 2 and the first pump light, and then outputs the multiplexed light to the dielectric material 504. The demultiplexing unit 505 is configured to separate the pump light. The polarization conversion unit 506 converts the polarized light 2 into the polarized light 1, and the polarized light 1 sequentially passes through the demultiplexing unit 509, the dielectric material 508, and the multiplexing unit 507, and then returns to the polarization beam splitter 501. For the other channel of polarized light 2, the multiplexing unit 507 multiplexes the polarized light 2 and the first pump light, and then outputs the multiplexed light to the dielectric material 508. The demultiplexing unit 509 is configured to separate the pump light, and the polarized light 2 output by the demultiplexing unit 505 sequentially passes through the polarization conversion unit 506, the demultiplexing unit 505, the dielectric material 504, the multiplexing unit 503, and the polarization conversion unit 502, and then returns to the polarization beam splitter 501. Then, the polarization beam splitter 501 performs polarization beam combining on the two returned channels of polarized light, and outputs the two channels of polarized light. In an example, the dielectric material 504 and the dielectric material 508 may specifically use PPLN.

It should be understood that the first wavelength conversion module 20 and the third wavelength conversion module 50 shown in FIG. 8 both use loop polarization diversity structures, and transmission delays of two optical signals are the same in the loop polarization diversity structure.

It should be noted that, in addition to the implementation shown in FIG. 8, the first wavelength conversion module 20, the second wavelength conversion module 30, and the third wavelength conversion module 50 may have other implementations. Implementations of the first wavelength conversion module 20 and the third wavelength conversion module 50 are similar. For ease of description, the following uses only the first wavelength conversion module 20 as an example for description. Similarly, the foregoing process is also applicable to the third wavelength conversion module 50. Details are not described again for the third wavelength conversion module 50.

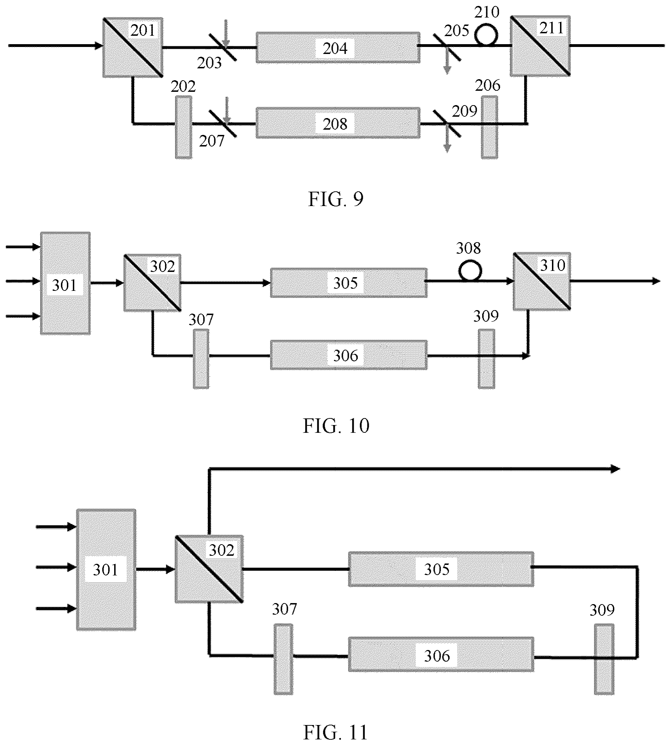

FIG. 9 is a diagram of a structure of a first wavelength conversion module according to an embodiment of this application. Different from the first wavelength conversion module shown in FIG. 8, as shown in FIG. 9, the first wavelength conversion module further includes a delay line 210 and a polarization beam combiner 211. The polarization beam splitter 201 is configured to perform polarization beam splitting on input light to obtain two channels of polarized light, where polarization directions of the two channels of polarized light are perpendicular to each other. For ease of description, polarized light in one polarization direction is denoted as polarized light 1, and polarized light in the other polarization direction is denoted as polarized light 2. The dielectric material 204 and the dielectric material 208 are effective for the polarized light 1, but are ineffective for the polarized light 2. Specifically, for one channel of polarized light 1, the multiplexing unit 203 multiplexes the polarized light 1 and the first pump light, and then outputs the multiplexed light to the dielectric material 204. The demultiplexing unit 205 is configured to separate the pump light. The delay line 210 is configured to: delay the polarized light 1 and then transmit the delayed polarized light 1 to the polarization beam combiner 211. For the other channel of polarized light 2, the polarization conversion unit 202 converts the polarized light 2 into the polarized light 1. The multiplexing unit 207 multiplexes the polarized light 1 and the first pump light, and then outputs the multiplexed light to the dielectric material 208. The demultiplexing unit 209 is configured to separate the pump light. The polarization conversion unit 202 converts the polarized light 1 into the polarized light 2, and outputs the polarized light 2 to the polarization beam combiner 211. Then, the polarization beam combiner 211 performs polarization beam combining on the two channels of polarized light, and outputs the two channels of polarized light. It should be understood that the first wavelength conversion module 20 shown in FIG. 9 uses a parallel polarization diversity structure, and the delay line 210 is disposed, so that transmission delays of two optical signals are the same in the parallel polarization diversity structure.

FIG. 10 is a diagram of a structure of a second wavelength conversion module according to an embodiment of this application. Different from the second wavelength conversion module shown in FIG. 8, as shown in FIG. 10, the second wavelength conversion module further includes a dielectric material 305, a dielectric material 306, a polarization conversion unit 307, a delay line 308, a polarization conversion unit 309, and a polarization beam combiner 310. The coupler 301 is configured to couple an optical signal from the first optical switch 10, the first pump light from the first pump light source 60, and the second pump light from the second pump light source 70 to the polarization beam splitter 302. The polarization beam splitter 302 is configured to perform polarization beam splitting on input light to obtain two channels of polarized light, where polarization directions of the two channels of polarized light are perpendicular to each other. For ease of description, polarized light in one polarization direction is denoted as polarized light 1, and polarized light in the other polarization direction is denoted as polarized light 2. The dielectric material 305 and the dielectric material 306 are effective for the polarized light 1, but are ineffective for the polarized light 2. Specifically, for one channel of polarized light 1, the polarized light 1 sequentially passes through the dielectric material 305 and the delay line 308, and is then transmitted to the polarization beam combiner 310. For the other channel of polarized light 2, the polarization conversion unit 307 converts the polarized light 2 into the polarized light 1. The polarized light 1 passes through the dielectric material 306 and is then transmitted to the polarization conversion unit 309. The polarization conversion unit 309 converts the polarized light 1 into the polarized light 2, and outputs the polarized light 2 to the polarization beam combiner 310. Then, the polarization beam combiner 310 performs polarization beam combining on the two channels of polarized light, and outputs the two channels of polarized light. In an example, the dielectric material 305 and the dielectric material 306 may specifically use silicon nitride (SiN) waveguides. It should be understood that the second wavelength conversion module 30 shown in FIG. 10 uses a parallel polarization diversity structure, and the delay line 308 is disposed, so that transmission delays of two optical signals are the same in the parallel polarization diversity structure.

FIG. 11 is another diagram of a structure of a second wavelength conversion module according to an embodiment of this application. Different from the second wavelength conversion module shown in FIG. 10, as shown in FIG. 11, the coupler 301 is configured to couple an optical signal from the first optical switch 10, the first pump light from the first pump light source 60, and the second pump light from the second pump light source 70 to the polarization beam splitter 302. The polarization beam splitter 302 is configured to perform polarization beam splitting on input light to obtain two channels of polarized light, where polarization directions of the two channels of polarized light are perpendicular to each other. For ease of description, polarized light in one polarization direction is denoted as polarized light 1, and polarized light in the other polarization direction is denoted as polarized light 2. The dielectric material 305 and the dielectric material 306 are effective for the polarized light 1, but are ineffective for the polarized light 2. Specifically, for one channel of polarized light 1, the polarized light 1 sequentially passes through the dielectric material 305, the polarization conversion unit 309, the dielectric material 306, and the polarization conversion unit 307, and is then transmitted to the polarization beam splitter 302. For the other channel of polarized light 2, the polarization conversion unit 307 converts the polarized light 2 into the polarized light 1. The polarized light 1 passes through the dielectric material 306 and is transmitted to the polarization conversion unit 309, and the polarization conversion unit 309 converts the polarized light 1 into the polarized light 2. The polarized light 2 passes through the dielectric material 305 and is then transmitted to the polarization beam splitter 302. Then, the polarization beam splitter 302 performs polarization beam combining on the two returned channels of polarized light, and outputs the two channels of polarized light. In an example, the dielectric material 305 and the dielectric material 306 may specifically use silicon nitride (SiN) waveguides. It should be understood that the second wavelength conversion module 30 shown in FIG. 11 uses a loop polarization diversity structure, and transmission delays of two optical signals are the same in the loop polarization diversity structure.

It can be learned from the foregoing descriptions that the wavelength conversion system provided in this application includes the first wavelength conversion module, the second wavelength conversion module, and the third wavelength conversion module. The first wavelength conversion module and the third wavelength conversion module are configured to perform cross-band wavelength conversion on input optical signals, and the second wavelength conversion module is configured to perform intra-band wavelength conversion on an input optical signal. In different scenarios, at least one wavelength conversion module may be selected from the foregoing three wavelength conversion modules according to actual requirements, to perform wavelength conversion, so that both intra-band conversion of any wavelength and cross-band conversion of any wavelength can be implemented. Therefore, the wavelength conversion system provided in this application can implement conversion of any wavelength in a wide spectrum range, to meet a requirement of a future wide-spectrum communication system. It should be understood that, in some possible scenarios, an original optical signal input into the wavelength conversion system may alternatively be directly and transparently transmitted, and a finally output target optical signal may also have a same wavelength as the original optical signal. In other words, after wavelength conversion by at least one wavelength conversion module, an optical signal of another wavelength is filtered out, and an original optical signal is output. This is equivalent to describing that the wavelength conversion system amplifies only the original optical signals. This extends an application scenario of the wavelength conversion system.

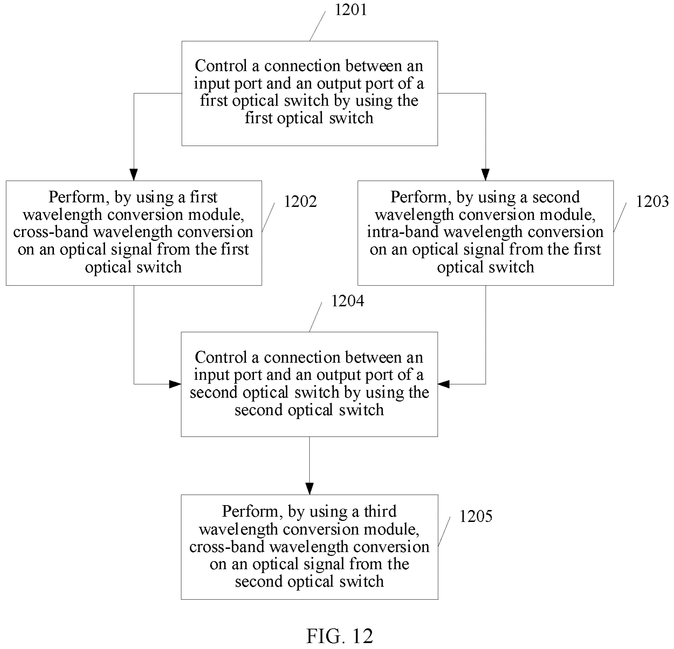

An embodiment of this application further provides a wavelength conversion method. The wavelength conversion method is applied to the wavelength conversion system described in the foregoing embodiments. FIG. 12 is a diagram of an embodiment of a wavelength conversion method according to this application. In this embodiment, the wavelength conversion method includes the following steps.

1201: Control a connection between an input port and an output port of a first optical switch by using a first optical switch.

It should be understood that the first optical switch includes two input ports and two output ports. There are a plurality of connection manners between the input ports and the output ports. For details, refer to related descriptions of the embodiment shown in FIG. 3. Details are not described herein again.

1202: Perform, by using a first wavelength conversion module, cross-band wavelength conversion on an optical signal from the first optical switch.

The first wavelength conversion module may specifically use wavelength conversion that is based on a second-order nonlinearity effect, to implement cross-band wavelength conversion. For a specific implementation, refer to the descriptions about the first wavelength conversion module in the foregoing embodiments. Details are not described herein again.

1203: Perform, by using a second wavelength conversion module, intra-band wavelength conversion on the optical signal from the first optical switch.

The second wavelength conversion module may specifically use wavelength conversion that is based on a third-order nonlinearity effect, to implement intra-band wavelength conversion. For a specific implementation, refer to the descriptions about the second wavelength conversion module in the foregoing embodiments. Details are not described herein again.

1204: Control a connection between an input port and an output port of a second optical switch by using the second optical switch.

It should be understood that the second optical switch includes two input ports and two output ports. There are a plurality of connection manners between the input ports and the output ports. For details, refer to related descriptions of the embodiment shown in FIG. 3. Details are not described herein again.

1205: Perform, by using a third wavelength conversion module, cross-band wavelength conversion on an optical signal from the second optical switch.

The third wavelength conversion module may specifically use wavelength conversion that is based on the second-order nonlinearity effect, to implement cross-band wavelength conversion. For a specific implementation, refer to the descriptions about the third wavelength conversion module in the foregoing embodiments. Details are not described herein again.

It should be noted that, during actual application, the connection manner between the input port and the output port in the first optical switch and the connection manner between the input port and the output port in the second optical switch may be flexibly controlled according to an actual requirement, to select at least one wavelength conversion module to perform wavelength conversion, so that both intra-band conversion of any wavelength and cross-band conversion of any wavelength can be implemented.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A wavelength conversion system, comprising: a first optical switch, a second optical switch, a first wavelength conversion module, a second wavelength conversion module, and a third wavelength conversion module, wherein the first optical switch comprises a first input port, a second input port, a first output port, and a second output port, the second optical switch comprises a third input port, a fourth input port, a third output port, and a fourth output port, an original optical signal is input to the first input port, the second input port is connected to the fourth output port, the first output port is connected to an input end of the first wavelength conversion module, the second output port is connected to an input end of the second wavelength conversion module, the third input port is connected to an output end of the first wavelength conversion module, the fourth input port is connected to an output end of the second wavelength conversion module, the third output port is connected to an input end of the third wavelength conversion module, and a target optical signal is output from an output end of the third wavelength conversion module;

   the first optical switch is configured to control a connection between the input port and the output port of the first optical switch;
   the second optical switch is configured to control a connection between the input port and the output port of the second optical switch;
   the first wavelength conversion module is configured to perform cross-band wavelength conversion on an optical signal from the first optical switch;
   the second wavelength conversion module is configured to perform intra-band wavelength conversion on the optical signal from the first optical switch; and
   the third wavelength conversion module is configured to perform cross-band wavelength conversion on an optical signal from the second optical switch.

2. The wavelength conversion system according to claim 1, wherein the second wavelength conversion module is specifically configured to perform, based on first pump light and second pump light, intra-band wavelength conversion on the optical signal from the first optical switch, wherein a frequency of the first pump light is at a central position between a first band and a second band, and a wavelength of the second pump light and a wavelength of the optical signal from the first optical switch are in the first band or the second band;

the first wavelength conversion module is specifically configured to perform, based on third pump light, cross-band wavelength conversion on the optical signal from the first optical switch, wherein a wavelength of the first pump light is twice a wavelength of the third pump light, a first frequency difference exists between a frequency of an optical signal on which wavelength conversion is not performed by the first wavelength conversion module and the frequency of the first pump light, and a second frequency difference exists between a frequency of an optical signal obtained through wavelength conversion performed by the first wavelength conversion module and the frequency of the first pump light, and an absolute value of the first frequency difference is equal to an absolute value of the second frequency difference; and

the third wavelength conversion module is specifically configured to perform, based on the third pump light, cross-band wavelength conversion on the optical signal from the second optical switch, wherein a third frequency difference exists between a frequency of an optical signal on which wavelength conversion is not performed by the third wavelength conversion module and the wavelength of the first pump light, a fourth frequency difference exists between a frequency of an optical signal obtained through wavelength conversion performed by the third wavelength conversion module and the frequency of the first pump light, and an absolute value of the third frequency difference is equal to an absolute value of the fourth frequency difference.

3. The wavelength conversion system according to claim 2, wherein the wavelength conversion system further comprises a first pump light source, a second pump light source, and a frequency multiplication module;

the first pump light source is configured to separately output the first pump light to the frequency multiplication module and the second wavelength conversion module;

the second pump light source is configured to output the second pump light to the second wavelength conversion module; and

the frequency multiplication module is configured to: perform frequency multiplication on the first pump light to obtain the third pump light, and separately output the third pump light to the first wavelength conversion module and the third wavelength conversion module.

4. The wavelength conversion system according to claim 2 or 3, wherein the frequency $\omega_{p1}$ of the first pump light, the frequency $\omega_{p2}$ of the second pump light, a frequency $\omega_{in}$ of an optical signal input into the second wavelength conversion module, and a frequency $\omega_{out}$ of an optical signal output by the second wavelength conversion module satisfy one of the following conditions:

$$\text{a condition 1: } \omega_{out} = \omega_{p1} + \omega_{p2} - \omega_{in};$$

$$\text{a condition 2: } \omega_{out} = \omega_{p1} + \omega_{in} - \omega_{p2}; \text{ or}$$

$$\text{a condition 3: } \omega_{out} = \omega_{p2} + \omega_{in} - \omega_{p1}.$$

5. The wavelength conversion system according to any one of claims 1 to 4, wherein a wavelength of the original optical signal is in the first band, the first input port is connected to the second output port, and the fourth input port is connected to the third output port;

the second wavelength conversion module is specifically configured to perform, in the first band, wavelength conversion on the original optical signal to obtain the target optical signal; and

the third wavelength conversion module is specifically configured to: perform wavelength conversion on the target optical signal to obtain an optical signal in the second band, and filter out the optical signal in the second band to output the target optical signal.

6. The wavelength conversion system according to any one of claims 1 to 4, wherein a wavelength of the original optical signal is in the second band, the first input port is connected to the first output port, the second input port is connected to the second output port, the third input port is connected to the fourth output port, and the fourth input port is connected to the third output port;

the first wavelength conversion module is specifically configured to perform wavelength conversion on the original optical signal to obtain an optical signal in the first band;

the second wavelength conversion module is specifically configured to perform, in the first band, wavelength conversion on the optical signal from the first wavelength conversion module; and

the third wavelength conversion module is specifically configured to perform wavelength conversion on the optical signal from the second wavelength conversion module to obtain a target optical signal whose wavelength is in the second band.

7. The wavelength conversion system according to any one of claims 1 to 4, wherein a wavelength of the original optical signal is in the first band, the first input port is connected to the second output port, and the fourth input port is connected to the third output port;

the second wavelength conversion module is specifically configured to perform, in the first band, wavelength conversion on the original signal; and

the third wavelength conversion module is specifically configured to convert a wavelength of the optical signal from the second wavelength conversion module to be in the second band to obtain the target optical signal.

8. The wavelength conversion system according to any one of claims 1 to 4, wherein a wavelength of the original optical signal is in the second band, the first input port is connected to the first output port, the second input port is connected to the second output port, the third input port is connected to the fourth output port, and the fourth input port is connected to the third output port;

the first wavelength conversion module is specifically configured to perform wavelength conversion on the original optical signal to obtain an optical signal in the first band;

the second wavelength conversion module is specifically configured to perform, in the first band, wavelength conversion on the optical signal from the first wavelength conversion module to obtain the target optical signal; and

the third wavelength conversion module is specifically configured to: perform wavelength conversion on the target optical signal to obtain an optical signal in the second band, and filter out the optical signal in the second band to output the target optical signal.

9. The wavelength conversion system according to any one of claims 1 to 8, wherein a dielectric material used by the first wavelength conversion module and the third wavelength conversion module is periodically polarized lithium niobate PPLN, and a dielectric material used by the second wavelength conversion module is a highly nonlinear fiber or a silicon nitride SiN waveguide.

10. The wavelength conversion system according to any one of claims 1 to 9, wherein the first wavelength conversion module uses a loop polarization diversity structure or a parallel polarization diversity structure, the second wavelength conversion module uses a loop polarization diversity structure or a parallel polarization diversity structure, the third wavelength conversion module uses a loop polarization diversity structure or a parallel polarization diversity structure, and transmission delays of two polarized optical signals are the same in the loop polarization diversity structure or the parallel polarization diversity structure.

11. A wavelength conversion method, wherein the wavelength conversion method is applied to a wavelength conversion system, and the wavelength conversion system comprises: a first optical switch, a second optical switch, a first wavelength conversion module, a second wavelength conversion module, and a third wavelength conversion module, wherein the first optical switch comprises a first input port, a second input port, a first output port, and a second output port, the second optical switch comprises a third input port, a fourth input port, a third output port, and a fourth output port, an original optical signal is input to the first input port, the second input port is connected to the fourth output port, the first output port is connected to an input end of the first wavelength conversion module, the second output port is connected to an input end of the second wavelength conversion module, the third input port is connected to an output end of the first wavelength conversion module, the fourth input port is connected to an output end of the second wavelength conversion module, the third output port is connected to an input end of the third wavelength conversion module, and a target optical signal is output from an output end of the third wavelength conversion module; and the method comprises:

controlling a connection between the input port and the output port of the first optical switch by using the first optical switch;

controlling a connection between the input port and the output port of the second optical switch by using the second optical switch;

performing, by using the first wavelength conversion module, cross-band wavelength conversion on an optical signal from the first optical switch;

performing, by using the second wavelength conversion module, intra-band wavelength conversion on the optical signal from the first optical switch; and

performing, by using the third wavelength conversion module, cross-band wavelength conversion on an optical signal from the second optical switch.

**12.** The method according to claim 11, wherein performing, by using the second wavelength conversion module, intra-band wavelength conversion on the optical signal from the first optical switch comprises:

performing, by using the second wavelength conversion and based on first pump light and second pump light, intra-band wavelength conversion on the optical signal from the first optical switch, wherein a frequency of the first pump light is at a central position between a first band and a second band, and a wavelength of the second pump light and a wavelength of the optical signal from the first optical switch are in the first band or the second band;

performing, by using the first wavelength conversion module, cross-band wavelength conversion on the optical signal from the first optical switch comprises:

performing, by using the first wavelength conversion module and based on third pump light, cross-band wavelength conversion on the optical signal from the first optical switch, wherein a wavelength of the first pump light is twice a wavelength of the third pump light, a first frequency difference exists between a frequency of an optical signal on which wavelength conversion is not performed by the first wavelength conversion module and the frequency of the first pump light, and a second frequency difference exists between a frequency of an optical signal obtained through wavelength conversion performed by the first wavelength conversion module and the frequency of the first pump light, and an absolute value of the first frequency difference is equal to an absolute value of the second frequency difference; and

performing, by using the third wavelength conversion module, cross-band wavelength conversion on the optical signal from the second optical switch comprises:

performing, by using the third wavelength conversion module and based on the third pump light, cross-band wavelength conversion on the optical signal from the second optical switch, wherein a third frequency difference exists between a frequency of an optical signal on which wavelength conversion is not performed by the third wavelength conversion module and the wavelength of the first pump light, a fourth frequency difference exists between a frequency of an optical signal obtained through wavelength conversion performed by the third wavelength conversion module and the frequency of the first pump light, and an absolute value of the third frequency difference is equal to an absolute value of the fourth frequency difference.

**13.** The method according to claim 12, wherein the wavelength conversion system further comprises a first pump light source, a second pump light source, and a frequency multiplication module, and the method further comprises:

separately outputting the first pump light to the frequency multiplication module and the second wavelength conversion module by using the first pump light source;

outputting the second pump light to the second wavelength conversion module by using the second pump light source; and

performing, by using the frequency multiplication module, frequency multiplication on the first pump light to obtain the third pump light, and separately outputting the third pump light to the first wavelength conversion module and the third wavelength conversion module.

**14.** The method according to claim 12 or 13, wherein the frequency $\omega_{p1}$ of the first pump light, the frequency $\omega_{p2}$ of the second pump light, a frequency $\omega_{in}$ of an optical signal input into the second wavelength conversion module, and a frequency $\omega_{out}$ of an optical signal output by the second wavelength conversion module satisfy one of the following conditions:

$$a\ condition\ 1:\ \omega_{out} = \omega_{p1} + \omega_{p2} - \omega_{in};$$

$$a\ condition\ 2:\ \omega_{out} = \omega_{p1} + \omega_{in} - \omega_{p2};\ or$$

$$\text{a condition 3: } \omega_{out} = \omega_{p2} + \omega_{in} - \omega_{p1}.$$

15. The method according to any one of claims 11 to 14, wherein a wavelength of the original optical signal is in the first band, the first input port is connected to the second output port, and the fourth input port is connected to the third output port;
performing, by using the second wavelength conversion module, intra-band wavelength conversion on the optical signal from the first optical switch comprises:

> performing, in the first band by using the second wavelength conversion module, wavelength conversion on the original optical signal to obtain the target optical signal; and
> performing, by using the third wavelength conversion module, cross-band wavelength conversion on the optical signal from the second optical switch comprises:
> performing, by using the third wavelength conversion module, wavelength conversion on the target optical signal to obtain an optical signal in the second band, and filtering out the optical signal in the second band to output the target optical signal.

16. The method according to any one of claims 11 to 14, wherein a wavelength of the original optical signal is in the second band, the first input port is connected to the first output port, the second input port is connected to the second output port, the third input port is connected to the fourth output port, and the fourth input port is connected to the third output port;
performing, by using the first wavelength conversion module, cross-band wavelength conversion on the optical signal from the first optical switch comprises:

> performing, by the first wavelength conversion module, wavelength conversion on the original optical signal to obtain an optical signal in the first band;
> performing, by using the second wavelength conversion module, intra-band wavelength conversion on the optical signal from the first optical switch comprises:

>> performing, in the first band by using the second wavelength conversion module, wavelength conversion on the optical signal from the first wavelength conversion module; and
>> performing, by using the third wavelength conversion module, cross-band wavelength conversion on the optical signal from the second optical switch comprises:
>> performing, by using the third wavelength conversion module, wavelength conversion on the optical signal from the second wavelength conversion module to obtain a target optical signal whose wavelength is in the second band.

17. The method according to any one of claims 11 to 14, wherein a wavelength of the original optical signal is in the first band, the first input port is connected to the second output port, and the fourth input port is connected to the third output port;
performing, by using the second wavelength conversion module, intra-band wavelength conversion on the optical signal from the first optical switch comprises:

> performing, in the first band by using the second wavelength conversion module, wavelength conversion on the original signal; and
> performing, by using the third wavelength conversion module, cross-band wavelength conversion on the optical signal from the second optical switch comprises:
> converting, by using the third wavelength conversion module, a wavelength of the optical signal from the second wavelength conversion module to be in the second band to obtain the target optical signal.

18. The method according to any one of claims 11 to 14, wherein a wavelength of the original optical signal is in the second band, the first input port is connected to the first output port, the second input port is connected to the second output port, the third input port is connected to the fourth output port, and the fourth input port is connected to the third output port;
performing, by using the first wavelength conversion module, cross-band wavelength conversion on the optical signal from the first optical switch comprises:

> performing, by the first wavelength conversion module, wavelength conversion on the original optical signal to

17

obtain an optical signal in the first band;

performing, by using the second wavelength conversion module, intra-band wavelength conversion on the optical signal from the first optical switch comprises:

performing, in the first band by using the second wavelength conversion module, wavelength conversion on an optical signal from the first wavelength conversion module to obtain the target optical signal; and

performing, by using the third wavelength conversion module, cross-band wavelength conversion on the optical signal from the second optical switch comprises:

performing, by using the third wavelength conversion module, wavelength conversion on the target optical signal to obtain an optical signal in the second band, and filtering out the optical signal in the second band to output the target optical signal.

19. The method according to any one of claims 11 to 18, wherein a dielectric material used by the first wavelength conversion module and the third wavelength conversion module is periodically polarized lithium niobate PPLN, and a dielectric material used by the second wavelength conversion module is a highly nonlinear fiber or a silicon nitride SiN waveguide.

20. The method according to any one of claims 11 to 19, wherein the first wavelength conversion module uses a loop polarization diversity structure or a parallel polarization diversity structure, the second wavelength conversion module uses a loop polarization diversity structure or a parallel polarization diversity structure, the third wavelength conversion module uses a loop polarization diversity structure or a parallel polarization diversity structure, and transmission delays of two polarized optical signals are the same in the loop polarization diversity structure or the parallel polarization diversity structure.

FIG. 1

FIG. 2

FIG. 3

FIG. 4

FIG. 5

FIG. 6

FIG. 7

EP 4 692 922 A1

FIG. 8

FIG. 9

FIG. 10

FIG. 11

1201

Control a connection between an input port and an output port of a first optical switch by using the first optical switch

Perform, by using a first wavelength conversion module, cross-band wavelength conversion on an optical signal from the first optical switch

1202

Perform, by using a second wavelength conversion module, intra-band wavelength conversion on an optical signal from the first optical switch

1203

1204

Control a connection between an input port and an output port of a second optical switch by using the second optical switch

Perform, by using a third wavelength conversion module, cross-band wavelength conversion on an optical signal from the second optical switch

1205

FIG. 12

## INTERNATIONAL SEARCH REPORT

| International application No. |
|---|
| **PCT/CN2024/079898** |

### A. CLASSIFICATION OF SUBJECT MATTER

G02F1/365(2006.01)i

According to International Patent Classification (IPC) or to both national classification and IPC

### B. FIELDS SEARCHED

Minimum documentation searched (classification system followed by classification symbols)

IPC: G02F

Documentation searched other than minimum documentation to the extent that such documents are included in the fields searched

Electronic data base consulted during the international search (name of data base and, where practicable, search terms used)

CNTXT; WPABS; WPABSC; VEN; ENTXT; ENTXTC; CJFD: 波长, 任意, 变换, 转变, 转换, 单元, 模块, 泵浦, 二阶, 三阶, 非线性, 光, 开关, 波段内, 垮波段, 灵活, 选择, wavelength, arbitrary, conver+, module, pump, second order, third order, non-linear, optical, switch, band, within, out, S band, L band, flexible, select, choose

### C. DOCUMENTS CONSIDERED TO BE RELEVANT

| Category* | Citation of document, with indication, where appropriate, of the relevant passages | Relevant to claim No. |
|---|---|---|
| A | WO 2018155017 A1 (AIST) 30 August 2018 (2018-08-30)<br>description, paragraph 10 | 1-20 |
| A | JP 2003066498 A (NIPPON TELEGRAPH & TELEPHONE CORP.) 05 March 2003 (2003-03-05)<br>entire document | 1-20 |
| A | CN 104317137 A (ZHEJIANG UNIVERSITY) 28 January 2015 (2015-01-28)<br>entire document | 1-20 |
| A | CN 104469555 A (HUAWEI TECHNOLOGIES CO., LTD. et al.) 25 March 2015 (2015-03-25)<br>entire document | 1-20 |
| A | JP 2017046299 A (NIPPON TELEGRAPH & TELEPHONE CORP.) 02 March 2017 (2017-03-02)<br>entire document | 1-20 |
| A | US 10750256 B1 (FUJITSU LTD.) 18 August 2020 (2020-08-18)<br>entire document | 1-20 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 April 2024** | **09 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/079898** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2006279835 A1 (FUJITSU LTD.) 14 December 2006 (2006-12-14)<br>entire document | 1-20 |

Form PCT/ISA/210 (second sheet) (July 2022)

| INTERNATIONAL SEARCH REPORT | | International application No. |
|---|---|---|
| Information on patent family members | | **PCT/CN2024/079898** |

| Patent document cited in search report | | | Publication date (day/month/year) | Patent family member(s) | | | Publication date (day/month/year) |
|---|---|---|---|---|---|---|---|
| WO | 2018155017 | A1 | 30 August 2018 | JPWO | 2018155017 | A1 | 12 December 2019 |
| JP | 2003066498 | A | 05 March 2003 | JP | 3771823 | B2 | 26 April 2006 |
| CN | 104317137 | A | 28 January 2015 | CN | 104317137 | B | 16 February 2018 |
| CN | 104469555 | A | 25 March 2015 | US | 2016195792 | A1 | 07 July 2016 |
| | | | | US | 9618822 | B2 | 11 April 2017 |
| | | | | EP | 3046334 | A1 | 20 July 2016 |
| | | | | EP | 3046334 | A4 | 03 August 2016 |
| | | | | EP | 3046334 | B1 | 15 November 2017 |
| | | | | WO | 2015035775 | A1 | 19 March 2015 |
| JP | 2017046299 | A | 02 March 2017 | JP | 6387331 | B2 | 05 September 2018 |
| US | 10750256 | B1 | 18 August 2020 | | None | | |
| US | 2006279835 | A1 | 14 December 2006 | US | 2009080064 | A1 | 26 March 2009 |
| | | | | US | 8031394 | B2 | 04 October 2011 |
| | | | | US | 7436586 | B2 | 14 October 2008 |
| | | | | EP | 1760914 | A2 | 07 March 2007 |
| | | | | EP | 1760914 | A3 | 05 December 2007 |
| | | | | EP | 1760914 | B1 | 02 December 2009 |
| | | | | JP | 2007072122 | A | 22 March 2007 |
| | | | | JP | 4431099 | B2 | 10 March 2010 |
| | | | | DE | 602006010780 | D1 | 14 January 2010 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310349077